# FASCICULE DE BREVET EUROPEEN

(11) **EP 2 825 411 B1**
(45) Date de publication et mention de la délivrance du brevet: **24.05.2017**
(21) Numéro de dépôt: 13702050.9
(22) Date de dépôt: 31.01.2013
(51) Int. Cl.: B60K 37/04, B60R 11/02, B60R 11/00

(54) **DISPOSITIF DE MONTAGE D'UN BOITIER, NOTAMMENT D'UNE RADIO, DANS UN COMPARTIMENT DE PLANCHE DE BORD D'UN VEHICULE AUTOMOBILE**
VORRICHTUNG ZUR MONTAGE EINER EINHEIT, INSBESONDERE EINES RADIOS, IN EINEM ARMATURENBRETTFACH EINES KRAFTFAHRZEUGS
DEVICE FOR MOUNTING A UNIT, NOTABLY A RADIO, IN A MOTOR VEHICLE INSTRUMENT PANEL COMPARTMENT

(30) Priorité: 14.03.2012 FR 1252296
(43) Date de publication de la demande: 21.01.2015
(73) Titulaire: Renault S.A.S., 92100 Boulogne-Billancourt (FR)
(72) Inventeur: PRIN, Isabelle, F-91400 Orsay (FR); DAGOREAU, Alain, F-91419 DOURDAN (FR); BOUGAULT, Michel, F-78380 Bougival (FR); PERVEYRIE, Sylvie, F-78280 Guyancourt (FR)
(86) Numéro de dépôt international: PCT/EP2013/051916
(87) Numéro de publication internationale: WO 2013/135420

(56) Documents cités:
- DE-A1- 3 225 466
- JP-U- 58 144 886
- US-A- 5 560 572
- US-A1- 2004 145 208

## Description

La présente invention concerne un dispositif de montage d'un boîtier, notamment d'une radio, dans un compartiment de planche de bord d'un véhicule automobile.

Le montage d'un boîtier de radio dans le compartiment prévu à cet effet dans la planche de bord d'un véhicule doit permettre de fixer correctement le poste dans toutes les directions. La cote verticale peut par exemple être donnée par la combinaison d'un pion placé à l'arrière du boîtier de radio avec des pions latéraux de rattrapage de jeu ; le pion arrière, central, pénètre dans un orifice correspondant situé au fond et au milieu du compartiment. Cependant, l'augmentation du nombre des connecteurs à l'arrière du boîtier, lié à l'augmentation des fonctions sur la radio, rend souhaitable de ne pas avoir à utiliser de pion arrière de centrage et d'assurer la cote verticale par d'autres moyens. Un dispositif de montage d'un boîtier, notamment d'une radio, dans un compartiment de planche de bord d'un véhicule automobile comprenant les caractéristiques du préambule de la revendication 1 est connu du document DE 32 25 466 A1. Le document US 5560572 fait connaître un dispositif de montage d'un boîtier présentant deux faces latérales parallèles sur chacune desquelles est disposé un organe mâle ou tenon, le dispositif comportant deux glissières latérales parallèles formées dans le compartiment de la planche de bord d'un véhicule et formant un organe femelle ou mortaise orientée dans une direction sensiblement longitudinale et ayant une zone d'entrée et une zone de fond moins haute que la zone d'entrée ; le tenon comporte une partie élastiquement compressible destinée à pousser verticalement le tenon dans la mortaise lors de l'introduction du tenon dans la zone de fond étroite (basse) de sa mortaise correspondante. La construction de la mortaise en deux parties séparées et du tenon en deux parties également est relativement compliquée.

Selon une solution observée sur des véhicules de la marque Mercedes ®, il existe un dispositif de montage avec un seul tenon sur chaque face du boîtier, réalisé sous forme d'une pièce mâle ovale comportant une anse élastiquement écrasable formée par un évidement parallèle au bord supérieur de la pièce, et une seule mortaise convergente de chaque côté du compartiment : quand on engage chacun des tenons élastiques dans sa mortaise correspondante, la partie élastique se déforme, s'écrase élastiquement, et assure un placage en Z de la radio, ce qui permet normalement d'absorber les dispersions géométriques de la planche de bord.

Cependant les dispositifs connus manquent de précision et le rattrapage des jeux n'est pas toujours atteint de manière suffisante.

Le but de l'invention est d'offrir une solution alternative de tenon et de mortaise de montage qui permette une meilleure précision et un meilleur rattrapage des jeux.

L'invention atteint son but grâce à un dispositif de montage d'un boîtier présentant deux faces latérales parallèles sur chacune desquelles est disposé un tenon, le dispositif comportant deux glissières latérales parallèles formées dans le compartiment de la planche de bord d'un véhicule et formant une mortaise orientée dans une direction sensiblement longitudinale et ayant une zone d'entrée et une zone de fond moins haute que la zone d'entrée, le tenon comportant une partie élastiquement compressible destinée à pousser verticalement le tenon dans la zone de fond de sa mortaise lors de l'introduction longitudinale du tenon dans sa mortaise correspondante, le tenon comprenant une partie centrale de laquelle partent deux bras symétriques opposés portant chacun deux pattes retournées sensiblement parallèles aux bras et formant des ancres longitudinales symétriques par rapport à la partie centrale et élastiquement compressibles en hauteur.

Ainsi, quand le tenon pénètre dans la mortaise, dans sa zone de fond moins haute, il est comprimé verticalement, ce qui est possible grâce aux pattes formant ancre qui pivotent un peu vers leur bras de support et réduisent la hauteur de l'ancre. Grâce à la constitution symétrique des parties compressibles du tenon, on s'est aperçu que le guidage du tenon dans la mortaise est meilleur que dans les solutions connues et que ce dispositif permet un bon rattrapage de jeu.

Le dispositif de l'invention présente avantageusement l'une ou l'autre des caractéristiques suivantes, seules ou en combinaison.
- les pattes de l'ancre sont séparées du bras de l'ancre par un espace longitudinal allongé qui est, à son extrémité proche de la naissance des pattes, courbé vers le bras, de manière à favoriser la flexibilité des pattes ;
- la partie centrale du tenon est constituée par un manchon transversal moins large que les bras et les pattes, de manière à favoriser un appui latéral équilibré par les ancres sur les parois latérales du compartiment ou sur une paroi latérale de la mortaise associée au tenon ;
- le tenon comporte sur son côté intérieur des pions de fixation aux faces latérales du boîtier, de manière à pouvoir le mettre en position facilement sur le boîtier ;
- chaque mortaise comprend essentiellement une première zone de guidage longitudinal, formant la zone d'entrée, de hauteur supérieure à la hauteur libre du tenon, et une seconde zone de compression verticale du tenon, formant la zone de fond, de hauteur inférieure à la hauteur libre du tenon.
- chaque mortaise comprend au voisinage de la zone de fond une paroi latérale de fixation pour les tenons.

D'autres caractéristiques et avantages de l'invention ressortiront de la description suivante d'un exemple de réalisation. Il sera fait référence aux dessins annexés sur lesquels :
La figure 1 est une vue schématique en perspective de trois-quarts arrière d'un poste de radio dont les faces latérales sont dotées des tenons élastiques conformes à l'invention.
La figure 2 est une vue en perspective d'un tenon élastique conforme à l'invention.
La figure 3 est une vue partielle en perspective de trois-quarts avant du boîtier de radio et d'une des deux mortaises latérales du compartiment, lors d'une première étape de l'engagement du boîtier de radio dans le compartiment.
La figure 4 est une vue partielle en perspective de trois-quarts avant du boîtier de radio et d'une des deux mortaises latérales du compartiment, lors d'une deuxième étape de l'engagement du boîtier de radio dans le compartiment.
La figure 5 est une vue latérale partielle du tenon élastique dans la mortaise latérale lors d'une troisième étape de l'engagement du boîtier de radio dans le compartiment.
La figure 6 est une vue latérale partielle du tenon élastique dans la mortaise latérale lors d'une quatrième étape de l'engagement du boîtier de radio dans le compartiment.
Les figures 7 et 8 sont des vues respectives de dessus et latérale du tenon de la figure 2.

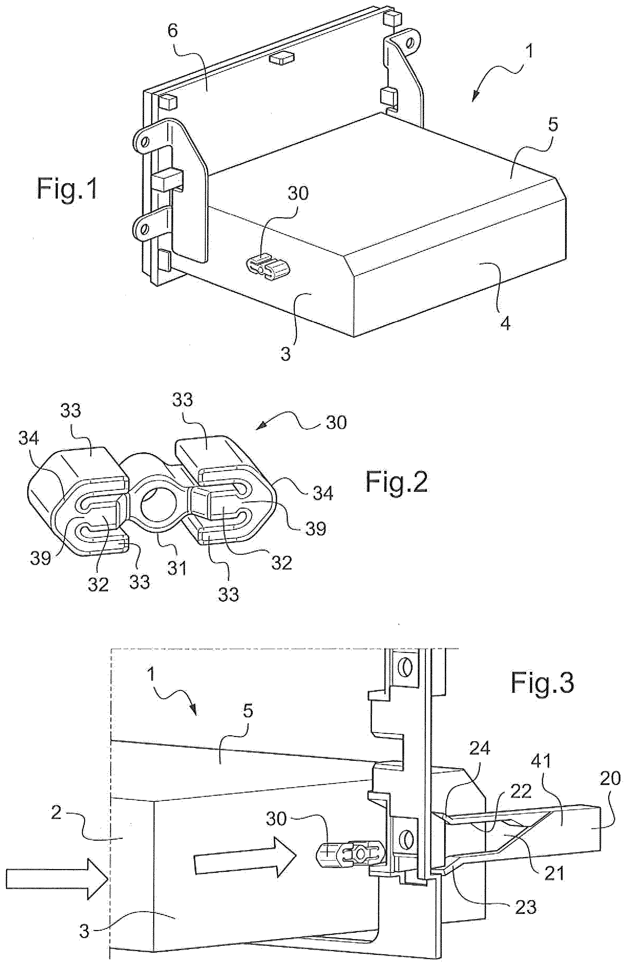

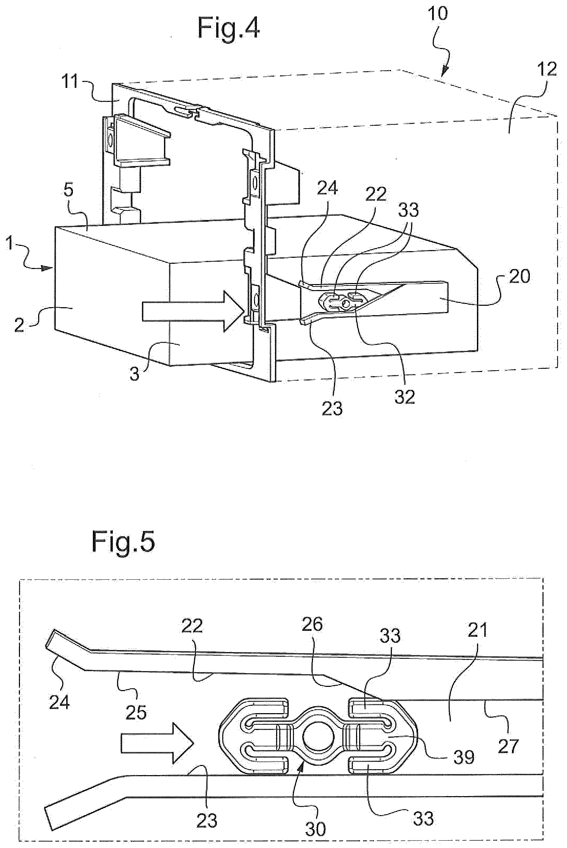

Comme représenté sur les figures 1, 3 et 4, le boîtier de radio 1 a une forme sensiblement parallélépipédique, avec une paroi avant verticale 2, deux parois latérales verticales 3, une paroi arrière verticale 4, un dessus 5 et un fond. Ce boîtier 1 est destiné à se loger dans un compartiment 10 seulement esquissé sur la figure 4 et formé dans la planche de bord d'un véhicule. Une façade avant 6 peut être montée sur la paroi avant 2 du boîtier 1. Le compartiment 10 est généralement d'une taille standardisée désignée par 1DIN pour un volume simple et 2DIN pour un volume double (comme représenté ici, le boîtier 1 n'en occupant que la moitié). Le compartiment 10 comporte un cadre de façade 11 sur lequel peuvent venir se fixer les équipements qui sont montés dans le compartiment, et notamment la façade avant 6 montée sur le boîtier 1. Le compartiment 10 comporte sur ses parois latérales 12 non représentées en détail (et qui d'ailleurs peuvent ne pas être des parois pleines) des glissières ou mortaises horizontales 20, une de chaque côté, destinées à recevoir et à retenir des tenons 30 élastiques disposés sur les faces latérales 3 du boîtier 1.

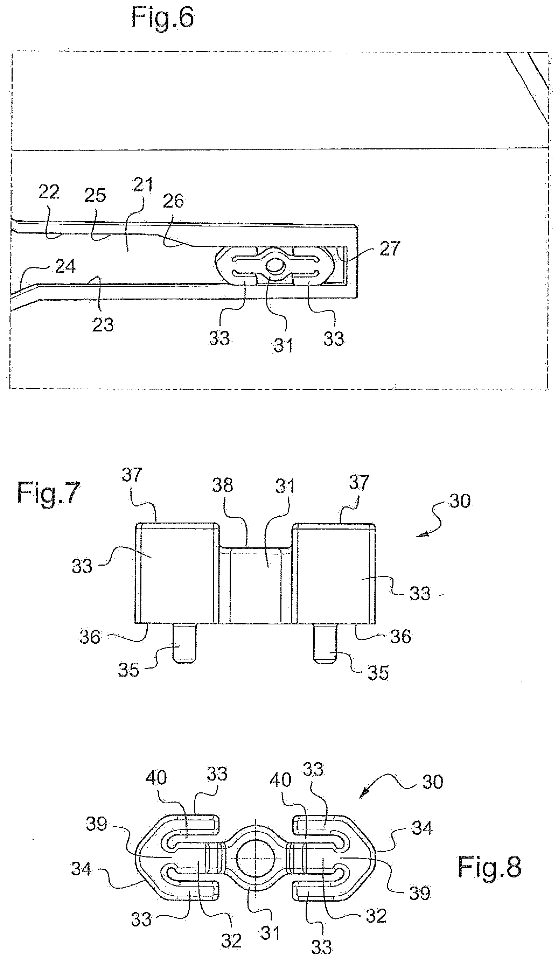

Les figures 2, 7, 8 montrent le détail d'un tenon élastique 30. Il comporte un manchon central 31 dont partent latéralement deux ancres formées par deux bras horizontaux longitudinaux 32 diamétralement opposés et qui se terminent chacun par deux pattes retournées 33 sensiblement parallèles aux bras 32. Les départs des pattes 33 forment à l'extrémité avant et arrière du tenon 30 une zone arrondie ou en ogive 34. Deux pions horizontaux transversaux de fixation 35 sont disposés sur un côté intérieur 36 des bras 32 de manière à pouvoir être introduits à force dans des orifices formés dans les parois latérales 3 du boîtier 1, afin de fixer les tenons 30 horizontalement sur lesdites parois 3. Du côté extérieur 37 des bras 32 et des pattes 33, opposé aux pions 35, les bras 32 et les pattes 33 font saillie au-delà de la face extérieure 38 du manchon 31. Pour permettre une bonne flexion élastique des pattes 33 vers le bras 32, un rétrécissement de matière 39 est formé à l'extrémité du bras 32, à l'angle de départ de la patte 33 vers le centre du tenon 30, de sorte que la rainure ou espace 40 formé entre la patte 33 et le bras 32, depuis l'extrémité de la patte 33 jusqu'à sa naissance, a essentiellement une configuration allongée horizontalement de hauteur constante, sauf à son extrémité (à la naissance des pattes 33) où cet espace 40 oblique légèrement vers l'intérieur du bras 32, comme représenté à la figure 8.

Les mortaises ou glissières horizontales 20 sont formées d'une ou plusieurs pièces et comportent essentiellement une lumière de guidage globalement horizontale 21 formée entre un profil ou rail supérieur 22 et un profil ou rail inférieur 23. La lumière de guidage 21 est ouverte latéralement du côté intérieur du compartiment 10 mais est fermée du côté extérieur, au moins dans la région d'extrémité 41 de la mortaise 20. La hauteur de la lumière 21 va en décroissant, par exemple par paliers, depuis son extrémité d'entrée jusqu'à son extrémité la plus éloignée. Les rails 22, 23 comportent en effet une première section courte à convergence rapide 24, suivi d'une première section 25 de hauteur sensiblement constante ou faiblement convergente, formant zone d'entrée et de guidage du tenon, elle-même suivie d'une nouvelle section courte à convergence rapide 26 (seul le rail supérieur 22 participe ici à la réduction de hauteur de la lumière 21, le rail inférieur 23 restant horizontal une fois la section d'entrée 24 passée), enfin suivie d'une nouvelle section 27 de hauteur sensiblement constante ou faiblement convergente, formant la zone de fond et de compression du tenon.

Les figures 3 à 6 illustrent quatre étapes de l'introduction du boîtier 1 dans le logement 10 et de la coopération des tenons 30 dans les mortaises horizontales 20.

Dans la figure 3, le boîtier 1 est partiellement introduit dans le compartiment 10 et le tenon 30 est en phase d'approche de la mortaise correspondante 20.

Dans la figure 4, le boîtier 1 poursuivant son enfoncement, le tenon globalement horizontal 30 a commencé à s'introduire dans la mortaise 20 globalement horizontale, dans la première section 25 de hauteur constante, cette hauteur étant plus grande que la hauteur libre du tenon 30.

Dans la figure 5, le tenon 30 a continué à glisser sur le rail inférieur 23 de la lumière 21 et s'est engagé partiellement dans la seconde section fortement convergente 26 pour accéder à la seconde section 27 de hauteur constante, laquelle est de hauteur légèrement inférieure à la hauteur libre du tenon 30. Par conséquent, lors du passage dans la section fortement convergente 26, les rails 21, 22 qui se resserrent appuient sur les pattes 33 de l'ancre de droite du tenon 30 et la hauteur de l'ancre diminue grâce à l'élasticité des pattes 33. Dans un exemple particulier, la hauteur de l'ancre peut diminuer de 0,5 mm de chaque côté, soit 1 mm en tout.

Quand le mouvement se poursuit, figure 6, l'ancre de gauche passe à son tour par la section fortement convergente et voit sa hauteur se comprimer légèrement pour correspondre à la hauteur de la section 27. Par conséquent dans cette section 27, qui est la section de fond de la mortaise 30, celle-ci est parfaitement maintenue en hauteur grâce au placage équilibré effectué par les pattes 33 des deux ancres formées sur le tenon 30.

Grâce à sa forme générale sensiblement horizontale avec à ses extrémités deux parties symétriques compressibles élastiquement (les ancres formées par les pattes 33), le guidage du tenon 30 dans sa mortaise 20 est excellent et équilibrés : les extrémités libres ou pattes 33 étant séparées du corps du tenon 30 par des gorges ou rainures 40 ayant une forme courbe à leur extrémité, il a été constaté que le fléchissement ou pivotement des extrémités était meilleur qu'avec des gorges ou rainures entièrement droites. Le rattrapage de jeu est plus efficace. Il peut compenser des jeux plus importants que dans les solutions connues.

Pour assurer sa résistance et son élasticité, le tenon 30 est réalisé dans un matériau tel qu'une matière plastique, notamment un POM (polyoxyméthylène).

## Revendications

1. Dispositif de montage d'un boîtier (1) présentant deux faces latérales parallèles (3) sur chacune desquelles est disposé un tenon (30), le dispositif comportant deux glissières latérales parallèles formées dans le compartiment de la planche de bord d'un véhicule et formant une mortaise (20) orientée dans une direction sensiblement longitudinale et ayant une zone d'entrée (25) et une zone de fond (27) moins haute que la zone d'entrée (27), le tenon (30) comportant une partie élastiquement compressible destinée à pousser verticalement le tenon (30) dans la zone de fond de sa mortaise (20) lors de l'introduction longitudinale du tenon (30) dans sa mortaise correspondante (20), le tenon (30) comprenant une partie centrale (31) de laquelle partent deux bras symétriques (32) opposés portant chacun deux pattes (33), **caractérisé en ce que** les deux pattes (33) sont des pattes retournées sensiblement parallèles aux bras (32) et formant des ancres longitudinales symétriques (32, 33) par rapport à la partie centrale et élastiquement compressibles en hauteur.

2. Dispositif selon la revendication 1, **caractérisé en ce que** les pattes (33) de l'ancre sont séparées du bras (32) de l'ancre par un espace longitudinal (40) allongé qui est, à son extrémité proche de la naissance des pattes (33), courbé vers le bras (32).

3. Dispositif selon la revendication 1 ou 2, **caractérisé en ce que** la partie centrale (31) du tenon est constituée par un manchon transversal moins large que les bras (32) et les pattes (33).

4. Dispositif selon l'une quelconque des revendications 1 à 3, **caractérisé en ce que** le tenon (30) comporte sur son côté intérieur des pions de fixation (35) aux faces latérales (3) du boîtier (1).

5. Dispositif selon l'une quelconque des revendications 1 à 4, **caractérisé en ce que** chaque mortaise (20) comprend essentiellement une première zone de guidage longitudinal (25) formant zone d'entrée, de hauteur supérieure à la hauteur libre du tenon (30), et une seconde zone (27) de compression verticale du tenon formant zone de fond, de hauteur inférieure à la hauteur libre du tenon (30).

6. Dispositif selon l'une quelconque des revendications 1 à 5, **caractérisé en ce que** chaque mortaise (20) comprend au voisinage de la zone de fond (27) une paroi latérale de fixation pour les tenons (30).

## Patentansprüche

1. Vorrichtung zur Montage eines Gehäuses (1), welches zwei parallele, seitliche Flächen (3) aufweist, an welchen jeweils ein Zapfen (30) angeordnet ist, wobei die Vorrichtung zwei parallele, seitliche Gleitschienen aufweist, welche in dem Fach des Armaturenbretts eines Kraftfahrzeugs ausgebildet sind, und eine Nut (20) bilden, welche in einer im Wesentlichen longitudinalen Richtung ausgerichtet ist und einen Eingangsbereich (25) und einen hinteren Bereich (27) besitzt, welcher weniger hoch als der Eingangsbereich (27) ist, wobei der Zapfen (30) einen elastisch komprimierbaren Bereich aufweist, welcher dafür vorgesehen ist, bei der longitudinalen Einführung des Zapfens (30) in seine entsprechende Nut (20) in dem hinteren Bereich seiner Nut (20) den Zapfen (30) senkrecht zusammen zu drücken, wobei der Zapfen (30) einen zentralen Abschnitt (31) aufweist, von welchem zwei symmetrische, gegenüber liegende Arme (32) ausgehen, welche jeweils zwei Laschen (33) tragen,
**dadurch gekennzeichnet, dass** die beiden Laschen (33) umgekehrte, im Wesentlichen parallel zu dem Arm (32) verlaufende Laschen sind und longitudinale, in Bezug auf den zentralen Abschnitt symmetrische und in der Höhe elastisch komprimierbare Anker (32, 33) bilden.

2. Vorrichtung nach Anspruch 1, **dadurch gekennzeichnet, dass** die Laschen (33) des Ankers von dem Arm (32) des Ankers durch einen gestreckten, longitudinalen Raum (40) getrennt sind, welcher an seinem der Entstehung der Laschen (33) nahe liegenden Ende zum Arm (32) hin gekrümmt ist.

3. Vorrichtung nach Anspruch 1 oder 2, **dadurch gekennzeichnet, dass** der zentrale Abschnitt (31) des Zapfens von einer Querhülse gebildet wird, welche weniger breit als die Arme (32) und die Laschen (33) sind.

4. Vorrichtung nach einem der Ansprüche 1 bis 3, **dadurch gekennzeichnet, dass** der Zapfen (30) an seiner Innenseite Stifte (35) zur Befestigung an den seitlichen Flächen (3) des Gehäuses (1) aufweist.

5. Vorrichtung nach einem der Ansprüche 1 bis 4, **dadurch gekennzeichnet, dass** jede Nut (20) im Wesentlichen einen ersten longitudinalen, den Eingangsbereich bildenden Führungsbereich (25) von einer Höhe, welche größer als die lichte Höhe des Zapfens (30) ist, und einen zweiten, den hinteren Bereich bildenden Bereich (27) zur vertikalen Komprimierung des Zapfens von einer Höhe aufweist, welche kleiner als die lichte Höhe des Zapfens (30) ist.

6. Vorrichtung nach einem der Ansprüche 1 bis 5, **dadurch gekennzeichnet, dass** jede Nut (20) in der Nähe des hinteren Bereichs (27) eine seitliche Wand zur Festlegung für die Zapfen (30) aufweist.

## Claims

1. Device for mounting a unit (1) having two parallel lateral faces (3) on each of which there is disposed a stud (30), the device having two parallel lateral slideways that are formed in the compartment in the instrument panel of a vehicle and form a groove (20) that is oriented in a substantially longitudinal direction and has an entry zone (25) and an end zone (27) that is less high than the entry zone (27), the stud (30) having an elastically compressible part that is intended to vertically push the stud (30) in the end zone of its groove (20) during the longitudinal introduction of the stud (30) into its corresponding groove (20), the stud (30) comprising a central part (31) from which there extend two opposite symmetrical arms (32) that each bear two lugs (33), **characterized in that** the two lugs (33) are turned-back lugs that are substantially parallel to the arms (32) and form longitudinal anchors (32, 33) that are symmetrical with respect to the central part and are elastically compressible vertically.

2. Device according to Claim 1, **characterized in that** the lugs (33) of the anchor are separated from the arm (32) of the anchor by an elongate longitudinal space (40) which, at its end close to the origin of the lugs (33), is curved toward the arm (32).

3. Device according to Claim 1 or 2, **characterized in that** the central part (31) of the stud consists of a transverse sleeve that is less wide than the arms (32) and the lugs (33).

4. Device according to any one of Claims 1 to 3, **characterized in that** the stud (30) has, on its inner side, pegs (35) for fixing to the lateral faces (3) of the unit (1).

5. Device according to any one of Claims 1 to 4, **characterized in that** each groove (20) comprises essentially a first zone (25) for longitudinal guidance, said first zone (25) forming the entry zone having a height greater than the free height of the stud (30), and a second zone (27) for vertical compression of the stud, said second zone (27) forming the end zone having a height less than the free height of the stud (30).

6. Device according to any one of Claims 1 to 5, **characterized in that** each groove (20) has, in the vicinity of the end zone (27), a lateral fixing wall for the studs (30).
